# EUROPÄISCHE PATENTSCHRIFT

(11) **EP 0 361 431 B1**
(45) Veröffentlichungstag und Bekanntmachung des Hinweises auf die Patenterteilung: **02.03.1994**
(21) Anmeldenummer: 89117829.5
(22) Anmeldetag: 27.09.1989
(51) Int. Cl.: C09B 29/50, C08K 5/23, C09B 63/00

(54) **Monoazopigment, Verfahren zu seiner Herstellung und seine Verwendung**
Monoazo pigment, process for its preparation and its use
Pigment monoazo, son procédé de préparation et son utilisation

(30) Priorität: 30.09.1988 DE 3833226
(43) Veröffentlichungstag der Anmeldung: 04.04.1990
(73) Patentinhaber: HOECHST AKTIENGESELLSCHAFT, 65926 Frankfurt am Main (DE)
(72) Erfinder: Deucker, Walter, Dr., D-6232 Bad Soden am Taunus (DE)

(56) Entgegenhaltungen:
- EP-A- 0 073 972
- EP-A- 0 126 405
- EP-A- 0 225 553
- DE-A- 2 616 981

## Beschreibung

Die vorliegende Erfindung betrifft das technische Gebiet der verlackten Azopigmente.

Es ist bereits bekannt, Metallsalze von einzelnen, zwei Sulfogruppen im Molekül enthaltenden Azoverbindungen der Pyrazolon-Reihe als Pigmente (Azofarblacke) zu verwenden:

So sind z.B. in der DE-PS 26 16 981 Metallsalze von Pyrazolon-Azofarbstoffen beschrieben, die durch Kupplung von diazotierter 2-Amino-4,5-dichlorbenzol-1-sulfonsäure mit 1-(Sulfoaryl)-3-methyl-5-pyrazolon-Verbindungen und anschließender Verlackung mit Metallsalzen erhalten werden.

Weiterhin werden in der DE-OS 31 33 404 (EP-A- 0 073 972 verlackte Azofarbstoffe erläutert, deren Diazokomponente eine Aminobenzolsulfonsäure mit einem zusätzlichen Substituenten in p-Stellung zur Aminogruppe und deren Kupplungskomponente ebenfalls eine 1-(Sulfoaryl)-3-methyl-5-pyrazolon-Verbindung ist.

In der EP-PS 0 126 405 sind ebenfalls verlackte Pyrazolon-Azopigmente erwähnt, die zwei verlackbare Gruppen aufweisen und auf Basis von tri- oder tetrasubstituierten Anilinen als Diazokomponenten und 1-Aryl-3-methyl-5-pyrazolon-Verbindungen als Kupplungskomponenten, wobei Aryl hier für einen trisubstituierten Phenylrest steht, aufgebaut sind. Unter anderem wird darin 2-Amino-4-chlor-5-methylbenzol-1-sulfonsäure als Diazokomponente zur Herstellung eines Azopigmentes offenbart.

Die anwendungstechnischen Eigenschaften der vom Stand der Technik genannten Azopigmente lassen zum Teil zu wünschen übrig. Solche aus der EP-PS 0 126 405 bekannten Azopigmente sind darüber hinaus wegen des hohen Substitutionsgrades relativ aufwendig in der Herstellung.

Gegenstand der Erfindung ist die wasserunlösliche gelbe Monoazo-Verbindung der Formel (I)

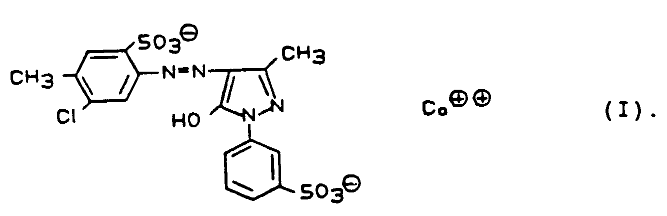

Die Herstellung der Monoazo-Verbindung der Formel (I) erfolgt nach an sich üblichen Methoden durch Kupplung eines Diazoniumsalzes des Amins der Formel (II) 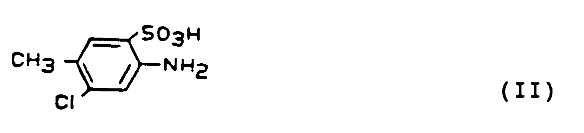
auf das Pyrazolon-Derivat der Formel (III) 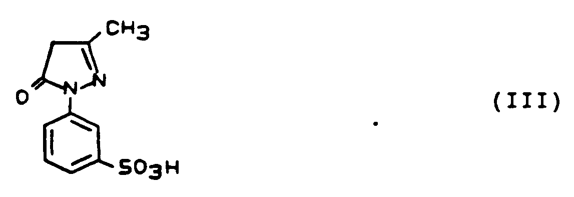
und anschließendes Verlacken des zuvor erhaltenen Kupplungsprodukts durch Umsetzung mit einem wasserlöslichen Calciumsalz.

Die Kupplungsreaktion zur Bildung der formelmäßig definierten Monoazo-Verbindung kann selbst als direkter oder indirekter Kupplungsvorgang durchgeführt werden. Bevorzugt wird die direkte Kupplung angewendet, wobei man beispielsweise eine Lösung oder Suspension des Diazoniumsalzes in einen erwärmten wäßrigen Ansatz der mit Hilfe von Alkali gelösten Kupplungskomponente tropfen oder laufen läßt und der pH-Wert durch Zugabe von weiterem Alkali im schwach sauren Milieu, vorzugsweise pH 6,0 bis 6,5 gehalten wird.

Zur Verlackung der so erzeugten Azoverbindung wird eine Suspension des Kupplungsprodukts mit einem Calciumsalz, vorzugsweise einem wasserlöslichen Calciumsalz in Form seiner wäßrigen Lösung, versetzt und einige Zeit nachgerührt, wobei eine leicht erhöhte Temperatur von 50 bis 100°C zur Vervollständigung der Verlackung in der Regel sinnvoll ist.

Um das verlackte Azopigment in einer besonders kornweichen Form zu erzielen, kann es vorteilhaft sein, die Verlackung in Gegenwart von Dispergiermitteln oder Tensiden, vor allem von kationaktiven Tensiden durchzuführen. Geeignete kationaktive Tenside für diese Aufgabe sind Fettamine mit 8 bis 18 C-Atomen, wie Octylamin, Nonylamin, Decylamin, Undecylamin, Dodecylamin, Tridecylamin, Tetradecylamin, Pentadecylamin, Hexadecylamin, Heptadecylamin, Octadecylamin, Oleylamin, Kokosfettamin und Talgamin, insbesondere die aufgeführten geradkettigen Fettamine. Weiterhin brauchbar sind basisch substituierte Derivate von Fettaminen, wie beispielsweise Kokosfettpropylendiamin und insbesondere jedoch Talgfettpropylendiamin.

Das ausgewählte Dispergiermittel oder Tensid kann der Kupplungssuspension nach erfolgter Kupplung und vor der Verlackung oder aber während der Kupplung zugesetzt werden. Es ist auch möglich, das Dispergiermittel oder Tensid der Kupplungskomponente vor der Kupplung zuzufügen.

Gegenstand der Erfindung ist auch die Verwendung der Verbindung der Formel (I) als Farbmittel zum Pigmentieren von natürlichen und synthetischen Materialien.

Die Verbindung der Formel (I) ist ein wertvolles gelbes Pigment, das sich vor allem durch hervorragende Temperaturstabilität und Ausblutechtheit auszeichnet sowie eine sehr gute Lichtbeständigkeit besitzt. Das erfindungsgemäße Pigment läßt sich beispielsweise einsetzen zum Pigmentieren von Druckfarben, Lacken, thermoplastischen und duroplastischen Massen, natürlichen Harzen und Kunstharzen, Polystyrol und dessen Mischpolymerisaten, Polyolefinen, insbesondere Polyethylen und Polypropylen, Polyacryl-Verbindungen, Polyvinyl-Verbindungen, beispielsweise Polyvinylchlorid und Polyvinylacetat, Polyestern und Gummi, sowie Kunstseiden aus Viskose und Celluloseethern, Celluloseestern, Polyamiden, Polyurethanen, Polyestern, beispielsweise Polyglykolterephthalaten, und Polyacrylnitril. Es ist auch von Nutzen zum Pigmentdruck und zum Pigmentieren von Papier in der Masse.

Wegen der hervorragenden Temperaturbeständigkeit des Pigmentes eignet es sich besonders zum Pigmentieren von Kunststoffen in der Masse, wie beispielsweise von Polystyrol und seinen Mischpolymerisaten, Polyolefinen, insbesondere Polyethylen und Polypropylen und entsprechenden Mischpolymerisaten, Polyvinylchlorid und Polyestern, insbesondere Polyethylenglykolterephthalat und Polybutylenterephthalat, sowie entsprechenden Mischkondensaten auf Polyesterbasis.

In den folgenden Beispielen beziehen sich Angaben über Teile und Prozente auf das Gewicht, soweit nichts anderes angeben ist. Volumenteile verhalten sich zu Gewichtsteilen wie Liter zu Kilogramm.

### Beispiel 1

221 Teile 2-Amino-4-chlor-5-methylbenzol-1-sulfonsäure werden in 2000 Teilen Trinkwasser und 123 Teilen 33%iger Natronlauge unter Erwärmen gelöst, geklärt und mit 300 Volumenteilen konzentrierter Salzsäure versetzt. Durch Zugabe von Eis kühlt man auf ca. 15°C und diazotiert mit 140 Volumenteilen einer 38%igen Natriumnitritlösung. In 2000 Teilen Trinkwasser und 150 Teilen 33%iger Natronlauge löst man 254 Teile 1-(3′-Sulfophenyl)-3-methyl-5-pyrazolon. In die 60°C warme Lösung der Kupplungskomponente läßt man die Suspension des Diazoniumsalzes langsam einlaufen, wobei der pH-Wert unter Zugabe von Natronlauge im Bereich von 6,0 bis 6,5 gehalten wird. Nach beendeter Kupplung erhitzt man auf 80°C und läßt rasch eine 80°C warme wäßrige Lösung von 250 Teilen Calciumchlorid einlaufen. Die Pigmentsuspension wird 2 Stunden bei 80°C nachgerührt, dann filtriert, gewaschen und bei 120°C getrocknet.

### Beispiel 2

Man verfährt wie in Beispiel 1, gibt aber vor der Kupplung zur Lösung der Kupplungskomponente zusätzlich 2,5 Teile Talgfettpropylendiamin, gelöst in 80 Teilen Wasser, hinzu.

### Beispiel 3

### Weich-PVC-Einfärbung

0,1 Teile des nach Beispiel 1 erhaltenen Pigments werden mit 100 Teilen einer Zusammensetzung aus 67 Teilen Polyvinylchlorid (^{(R)}Hostalit S 4170, Hoechst AG), 31 Teilen Phthalsäure-bis-(2-ethylhexyl)-ester, 2 Teilen Dibutylzinnthioglykolat und 0,5 Teilen Titandioxid (PV-Echtweiß R01, Hoechst AG), die durch Vermengen der Bestandteile in einem Schnellmischer bei ca. 90°C und anschließendem Abkühlen in einem Kühlmischer hergestellt worden ist, vermischt und in einem heizbaren Mischwalzwerk bei 130°C zu einem Walzfell verarbeitet. Das erhaltene, in einer Hochdruckdampfpresse verpreßte Walzfell zeigt eine klare, intensive Gelbfärbung von sehr guter Licht- und Ausblutechtheit.

### Beispiel 4

Man verfährt analog Beispiel 3, wobei jedoch die 0,1 Teile Pigment aus Beispiel 1 durch 0,1 Teile Pigment aus Beispiel 2 ersetzt werden. Man erhält eine intensive Gelbfärbung in Weich-PVC mit vergleichbar guten Echtheiten wie in Beispiel 3.

### Beispiel 5

### Polyethylen-Einfärbung

0,9 Teile des nach Beispiel 1 erhaltenen Pigments werden mit 300 Teilen Polyethylenpulver (^{(R)}Hostalen GC 7260, Hoechst AG) und 3 Teilen Titandioxid (Titandioxid Rutil ^{(R)}Kronos CL 220, Kronos Titan GmbH) in einem Trommelmischer intensiv gemischt. Zum Dispergieren der Pigmente wird die Mischung zweimal mit einem Extruder bei 200°C extrudiert und die erhaltenen Stränge granuliert. Ein Teil des Granulates wird auf einer Spritzgußmaschine bei 200°C zu plättchenförmigen Spritzlingen verarbeitet, die eine klare gelbe Färbung von ausgezeichneter Hitzestabilität aufweisen.

### Beispiel 6

Man verfährt analog Beispiel 5, wobei die 0,9 Teile Pigment nach Beispiel 1 durch 0,9 Teile Pigment nach Beispiel 2 ersetzt werden. Es wird eine dem Beispiel 5 vergleichbare Färbung mit sehr guter Hitzestabilität erhalten.

## Patentansprüche

1. Wasserunlösliche Monoazo-Verbindung der Formel (I)

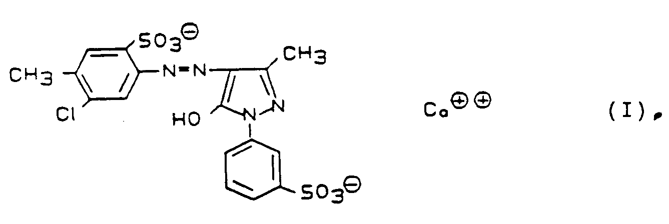

2. Verfahren zur Herstellung der Monoazo-Verbindung der Formel (I) 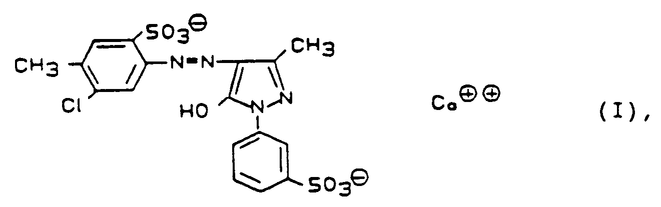 gekennzeichnet durch Kupplung eines Diazoniumsalzes des Amins der Formel (II) 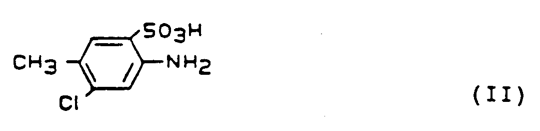 auf das Pyrazolon-Derivat der Formel (III) 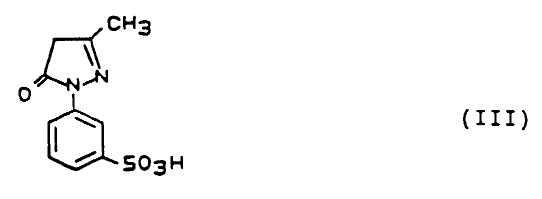 und anschließendes Verlacken des zuvor erhaltenen Kupplungsprodukts durch Umsetzung mit einer wasserlöslichen Calciumsalz.

3. Verfahren nach Anspruch 2, dadurch gekennzeichnet, daß zur Durchführung der Kupplung die wäßrige Lösung des Diazoniumsalzes zur wäßrigen Lösung der mit Hilfe von Alkali gelösten Kupplungskomponente zugefügt wird.

4. Verfahren nach Anspruch 2 oder 3, dadurch gekennzeichnet, daß die Kupplung bei einem pH-Wert von 6,0 bis 6,5 durchgeführt wird.

5. Verfahren nach einem oder mehreren der Ansprüche 2 bis 4, dadurch gekennzeichnet, daß als Calciumsalz CaCl₂ eingesetzt wird.

6. Verfahren nach einem oder mehreren der Ansprüche 2 bis 5, dadurch gekennzeichnet, daß das Verlacken in Gegenwart eines Dispergiermittels oder Tensids erfolgt.

7. Verfahren nach Anspruch 6, dadurch gekennzeichnet, daß als Tensid ein kationaktives Tensid, vorzugsweise ein Fettamin mit 8 bis 18 C-Atomen oder ein basisches Derivat von Fettaminen, eingesetzt wird.

8. Verwendung der Monoazo-Verbindung nach Anspruch 1 als Farbmittel zum Pigmentieren von natürlichen und synthetischen Materialien.

9. Verwendung nach Anspruch 8 zum Pigmentieren von Druckfarben, Lacken, thermoplastischen und duroplastischen Massen, natürlichen Harzen und Kunstharzen, Polystyrol und dessen Mischpolymerisaten, Polyolefinen, insbesondere Polyethylen und Polypropylen, Polyacryl-Verbindungen, Polyvinyl-Verbindungen, beispielsweise Polyvinylchlorid und Polyvinylacetat, Polyestern und Gummi, sowie Kunstseiden aus Viskose und Celluloseethern, Celluloseestern, Polyamiden, Polyurethanen, Polyestern, beispielsweise Polyglykolterephthalaten, und Polyacrylnitril.

10. Verwendung nach Anspruch 8 oder 9 zum Pigmentieren von Polystyrol, Polyolefinen, Polyvinylchlorid oder Polyestern.

## Claims

1. A water-insoluble monoazo compound of the formula (I)

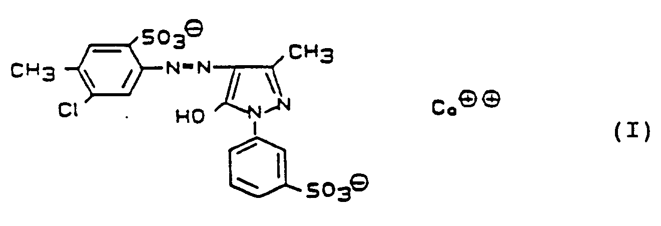

2. A process for the preparation of the monoazo compound of the formula (I) 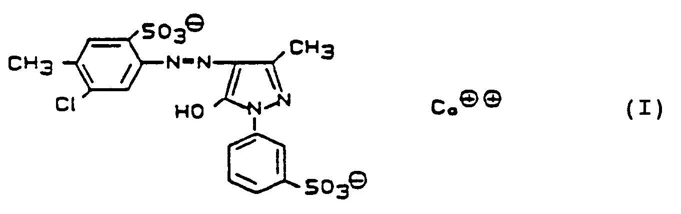 which comprises coupling a diazonium salt of the amine of the formula (II) 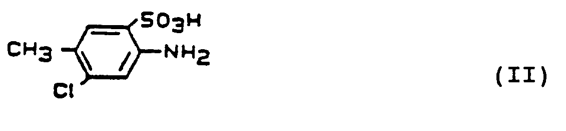 onto the pyrazolone derivative of the formula (III) 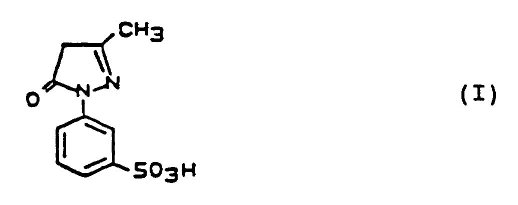 and subsequently laking the previously obtained coupling product by reaction with a water-soluble calcium salt.

3. The process as claimed in claim 2, wherein the coupling is carried out by adding the aqueous solution of the diazonium salt to the aqueous solution of the coupling component dissolved by means of alkali.

4. The process as claimed in claim 2 or 3, wherein the coupling is carried out at a pH of 6.0 to 6.5.

5. The process as claimed in one or more of claims 2 to 4, wherein CaCl₂ is used as the calcium salt.

6. The process as claimed in one or more of claims 2 to 5, wherein the laking is carried out in the presence of a dispersant or surfactant.

7. The process as claimed in claim 6, wherein a cation-active surfactant, preferably a fatty amine having 8 to 18 carbon atoms or a basic derivative of the fatty amines, is used as the surfactant.

8. Use of the monoazo compound as claimed in claim 1 as colorant for the pigmenting of natural and synthetic materials.

9. Use as claimed in claim 8 for the pigmenting of printing inks, lacquers, thermoplastic and thermosetting materials, natural resins and synthetic resins, polystyrene and its copolymers, polyolefins, in particular polyethylene and polypropylene, polyacrylic compounds, polyvinyl compounds, for example polyvinyl chloride and polyvinyl acetate, polyesters and rubber, and also rayons made of viscose and cellulose ethers, cellulose esters, polyamides, polyurethanes, polyesters, for example polyglycol terephthalates, and polyacrylonitrile.

10. Use as claimed in claim 8 or 9 for the pigmenting of polystyrene, polyolefins, polyvinyl chloride or polyesters.

## Revendications

1. Composé monoazoïque insoluble dans l'eau de formule (I)

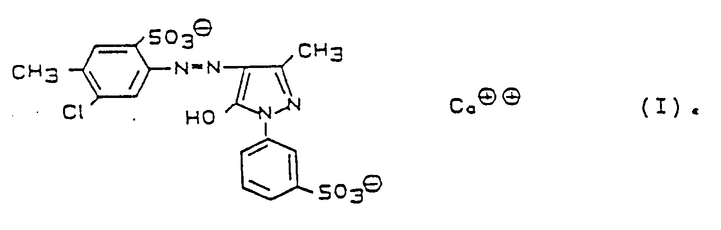

2. Procédé pour la préparation du composé monoazoïque de formule (I) 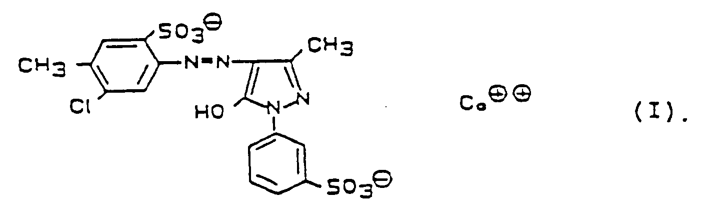 caractérisé en ce qu'on copule un sel de diazonium de l'amine de formule (II) 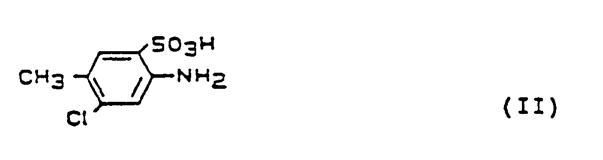 sur le dérivé de pyrazolone de formule (III) 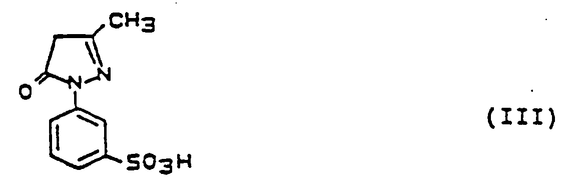 et ensuite on forme le pigment du produit de copulation obtenu auparavant par réaction avec un sel de calcium soluble dans l'eau.

3. Procédé selon la revendication 2, caractérisé en ce que en vue de réaliser la copulation on ajoute la solution aqueuse du sel de diazonium à la solution aqueuse des composants de copulation solubilisée à l'aide d'alcalin.

4. Procédé selon la revendication 2 ou 3, caractérisé en ce qu'on réalise la copulation à une valeur de pH de 6,0 à 6,5.

5. Procédé selon une ou plusieurs des revendications 2 à 4 caractérisé en ce qu'on utilise comme sel de calcium le CaCl₂.

6. Procédé selon une ou plusieurs des revendications 2 à 5 caractérisé en ce que la formation de pigments se fait en présence d'un agent dispersant ou d'un agent de surface.

7. Procédé selon la revendication 6, caractérisé en ce qu'on utilise en tant qu'agent de surface un agent de surface actif cationique, de préférence une amine grasse avec 8 à 18 atomes de C ou un dérivé basique des amines grasses.

8. Utilisation du composé monoazoïque selon la revendication 1 en tant que colorant pour la pigmentation de matériaux naturels et synthétiques.

9. Utilisation selon la revendication 8 pour la pigmentation d'encres d'imprimerie ou d'impression, de laques et vernis, de matières thermoplastiques ou duroplastiques en masse, de résines naturelles et de résines synthétiques, du polystyrène et de ses copolymères, de polyoléfines, surtout du polyéthylène et du polypropylène, de composés polyacryliques, de composés polyvinyliques, par exemple chlorure de polyvinyle et acétate de polyvinyle, de polyesters et de caoutchoucs, ainsi que de soies synthétiques de viscose et d'éthers de cellulose, esters de cellulose, polyamides, polyuréthannes, polyesters, par exemple téréphtalates de polyglycol et polyacrylonitrile.

10. Utilisation selon la revendication 8 ou 9 pour la pigmentation du polystyrène, de polyoléfines, de chlorure de polyvinyle ou de polyesters.
